# EUROPEAN PATENT APPLICATION

(11) **EP 4 410 521 A1**
(43) Date of publication of application: **07.08.2024**
(21) Application number: 23858439.5
(22) Date of filing: 22.08.2023
(51) Int. Cl.: B29C 65/02, B29C 65/00, B29C 65/78, H01M 50/105, H01M 50/178, B29C 65/18, B29L 31/00

(54) **DEVICE FOR SEALING POUCH-TYPE SECONDARY BATTERY, AND METHOD FOR SEALING POUCH-TYPE SECONDARY BATTERY**

(30) Priority: 23.12.2022 KR 20220183248; 18.08.2023 KR 20230108284
(71) Applicant: LG ENERGY SOLUTION, LTD., Seoul 07335 (KR)
(72) Inventor: CHOI, Minsung, Daejeon 34122 (KR)
(74) Representative: Goddar, Heinz J.
(86) International application number: PCT/KR2023/012388
(87) International publication number: WO 2024/135989

(57) **Abstract**

The present invention is to provide an apparatus and method for sealing a pouch-type secondary battery.

## Description

### [Technical Field]

This application claims priority to and the benefit of Korean Patent Application No. 10-2022-0183248 filed with the Korean Intellectual Property Office on December 23, 2022, the entire contents of which are incorporated herein by reference.

The present invention relates to an apparatus and method for sealing a pouch-type secondary battery.

### [Background Art]

The demand for secondary batteries such as electric vehicles and mobile devices is rapidly expanding, and there is an increasing need for the condition diagnosis and the quality stability of the secondary batteries. The secondary batteries may be divided into a nickel-cadmium battery, a nickel-metal hydride battery, a nickel-hydrogen battery, a lithium secondary battery, and the like.

The secondary batteries are being widely used in a cutting-edge electronic device field such as phones, laptop computers, and camcorders. The secondary battery may be classified into a can-type secondary battery in which an electrode assembly is embedded in a metal can, and a pouch-type secondary battery in which an electrode assembly is embedded in a pouch.

The pouch-type secondary battery includes an electrode assembly, electrode leads coupled to the electrode assembly, and a pouch configured to accommodate the electrode assembly in a state in which tips of the electrode leads are extended to the outside. Further, the electrode assembly has a structure in which electrodes and separators are alternately stacked. The pouch includes an accommodation portion configured to accommodate the electrode assembly, and a sealing portion configured to tightly seal the accommodation portion.

In this case, because of a relatively large thickness of the electrode lead, a pre-sealing process of sealing an electrode lead/pouch section is additionally required. Further, because of a difference in thickness between the electrode lead/pouch section and the pouch/pouch section, a region (non-sealed region) in which an end portion of the electrode lead/pouch section are not sealed is formed, which causes a problem of a leak of an electrolyte to the outside of the pouch.

Therefore, there is a need for a technology for ensuring process efficiency and preventing the electrode lead/pouch section from having a non-sealed region.

### <Document of Related Art>

Korean Patent Application Laid-Open No. 10-2018-0023185

### [Detailed Description of the Invention]

### [Technical Problem]

The present invention has been made in an effort to provide an apparatus and method for sealing a pouch-type secondary battery, which is capable of efficiently sealing an electrode lead/pouch section.

### [Technical Solution]

An embodiment of the present invention provides an apparatus for sealing a pouch-type secondary battery including a sealing portion, the apparatus including: a transfer part configured to move the pouch-type secondary battery in one direction; a pressing part including an elastic body configured to press at least one surface of the sealing portion; and a heating part configured to heat the sealing portion.

Another embodiment of the present invention provides a method of sealing a pouch-type secondary battery including a sealing portion, the method including: moving the pouch-type secondary battery in one direction; heating at least one surface of the sealing portion of the pouch-type secondary battery moving in one direction; and pressing, by an elastic body, at least one surface of the sealing portion of the pouch-type secondary battery moving in one direction.

### [Advantageous Effects]

The apparatus and method for sealing a pouch-type secondary battery according to the embodiment of the present invention may prevent the occurrence of a non-sealed region, thereby reducing a likelihood of the occurrence of a defect caused by a problem of a leak of the electrolyte to the outside of the pouch.

The apparatus and method for sealing a pouch-type secondary battery according to the embodiment of the present invention may efficiently manage the process.

The apparatus and method for sealing a pouch-type secondary battery according to the embodiment of the present invention may continuously seal the pouch-type secondary battery, thereby reducing the amount of time required for the sealing process.

The pouch-type secondary battery, which is manufactured by the apparatus and method for sealing a pouch-type secondary battery according to the embodiment of the present invention, has excellent performance.

### [Brief Description of Drawings]

FIG. 1 is a view illustrating an embodiment of an apparatus and method for sealing a pouch-type secondary battery according to the present invention.
FIG. 2 is a view illustrating an apparatus and method for sealing a pouch-type secondary battery in the related art.
FIG. 3 is an enlarged view of an electrode lead/pouch section that is sealed by the apparatus and method for sealing a pouch-type secondary battery according to the present invention.

### [Explanation of Reference Numerals and Symbols]

1: Elastic body
1a, 1b: Movable roller
2, 2a, 2b: Heater
3, 3a, 3b: pressing roller
4: Pouch-type secondary battery

### [Best Mode]

Hereinafter, the present invention will be described in detail so that those with ordinary skill in the art to which the present invention pertains may easily carry out the present invention. However, the present invention may be implemented in various different ways and is not limited to the embodiments described herein.

Throughout the specification, unless explicitly described to the contrary, the word "comprise" or "include" and variations, such as "comprises", "comprising", "includes" or "including", means the further inclusion of stated constituent elements, not the exclusion of any other constituent elements.

In the present specification, the term 'p to q' means 'p or more and q or less'.

In the present specification, the term 'sealing portion' means a region of a pouch that is sealed to seal the pouch that accommodates an electrode assembly. As described below, the sealing portion may include an electrode lead/pouch section and a pouch/pouch section.

In the present specification, the term "electrode lead/pouch section" means a region in which the electrode lead and the pouch are sealed in the sealing region, i.e., a region corresponding to a distance between ends of the electrode lead based on a movement direction of the pouch-type battery.

In addition, in the present specification, the term "pouch/pouch section" means a region in which the pouches are sealed in the sealing region, i.e., a region made by excluding the electrode lead/pouch section from the sealing region.

In the description of the present invention, the specific descriptions of well-known related technologies will be omitted when it is determined that the specific descriptions may unnecessarily obscure the subject matter of the present invention.

### <Apparatus for sealing pouch-type secondary battery>

An embodiment of the present invention provides an apparatus for sealing a pouch-type secondary battery including a sealing portion, in which a pressing part including an elastic body presses the sealing portion. In case that the elastic body presses the sealing portion, the sealing portion and the pressing part come into close contact with each other. Therefore, it is possible to prevent the occurrence of a region (non-sealed region) that is not sealed at a portion where a stepped portion, such as a boundary portion between the electrode lead and the pouch, exists.

In the embodiment of the present invention, a transfer part may be a conveyor belt. In this case, it is easier to continuously move the pouch-type secondary battery.

In the embodiment of the present invention, the pressing part may be installed in one direction.

In the embodiment of the present invention, the pressing part may further include a pressing roller. The pressing roller may apply additional pressure to the sealing portion during a process in which the elastic body presses the sealing portion. That is, the pressing roller may also press at least one surface of the sealing portion.

In the embodiment of the present invention, the elastic body may be a flexible band. In the present specification, the configuration in which the elastic body is flexible means that the elastic body has flexibility and features, such that the elastic body is deformed when predetermined pressure or load is applied to the elastic body, and the elastic body is restored to an original shape when the predetermined pressure or load is eliminated. Materials having the above-mentioned features may be expressed as the elastic body.

In the embodiment of the present invention, the pressing part may include a pair of elastic bodies.

In the embodiment of the present invention, the pressing part may further include a pair of pressing rollers.

That is, the apparatus for sealing a pouch-type secondary battery according to the embodiment of the present invention may press two opposite surfaces of the sealing portion.

In the embodiment of the present invention, the heating part may include a heater.

The heater may heat at least one surface of the sealing portion. In addition, the heating part may include a pair of heaters to improve sealing efficiency. That is, the two opposite surfaces of the sealing portion may be heated.

That is, the embodiment of the present invention provides the apparatus for sealing a pouch-type secondary battery, the apparatus including the conveyor belt configured to move the pouch-type secondary battery in one direction, the elastic body installed in one direction in which the pouch-type secondary battery moves, the elastic body being configured to come into contact with at least one surface of the sealing portion, the heater configured to heat at least one surface of the sealing portion, and the pressing roller configured to press at least one surface of the sealing portion there has been heated by the heater.

The embodiment of the present invention provides the apparatus for sealing a pouch-type secondary battery, the apparatus including a conveyor belt configured to move the pouch-type secondary battery in one direction, the pair of elastic bodies installed in one direction in which the pouch-type secondary battery moves, the pair of elastic bodies being configured to come into contact with the sealing portion, and the pair of heaters configured to heat the sealing portion, and the pair of pressing rollers configured to press the sealing portion heated by the pair of heaters.

The apparatus for sealing a pouch-type secondary battery according to the embodiment of the present invention seals the pouch-type secondary battery while moving the pouch-type secondary battery in one direction by using the conveyor belt, and the apparatus may prevent the occurrence of a non-sealed region, thereby reducing a likelihood of the occurrence of a defect caused by a problem of a leak of the electrolyte to the outside of the pouch. In addition, the apparatus may seal the pouch-type secondary battery through the continuous process, thereby efficiently managing the process and reducing the amount of time required for the sealing process.

As a result, the pouch-type secondary battery, which is manufactured by using the apparatus for sealing a secondary battery according to the embodiment of the present invention, has excellent performance.

In the embodiment of the present invention, the pair of heaters configured to heat the sealing portion may be disposed in the elastic body, and the pair of pressing rollers configured to press the sealing portion heated by the pair of heaters may be disposed in the elastic body. The configuration in which the pair of heaters and the pair of pressing rollers are disposed in the elastic body means a structure in which the heat generated by the heaters and the pressure generated by the pressing rollers are transferred to the sealing portion through the elastic body.

The apparatus for sealing a pouch-type secondary battery according to the embodiment of the present invention may include movable rollers configured to enable the elastic body to move along a predetermined route.

That is, in the embodiment of the present invention, the elastic body may include the movable rollers. The movable rollers enable the elastic body to consistently move along the predetermined route. That is, the movable rollers enable the elastic body to circulate in the predetermined route. The movable roller may be provided as a pair of movable rollers.

In the present specification, the predetermined route may be referred to as a circulation route for the elastic body. Because the elastic bodies move along the circulation routes, the heat generated by the heaters and the pressure generated by the pressing rollers may be continuously transferred to the sealing portion that passes between the elastic bodies.

That is, in the embodiment of the present invention, the pressing part may include the elastic bodies, and the movable rollers, the heaters, and the pressing rollers may be included in the elastic bodies. In this case, the movable rollers, the heaters, and the pressing rollers may be respectively provided as a pair of movable rollers, a pair of heaters, and a pair of pressing rollers.

In the embodiment of the present invention, a length of the elastic body may be equal to or shorter than 0.5 m to 1.5 m, but the present invention is not limited thereto. The length may be determined depending on a size of the sealing apparatus, a size of the pouch-type secondary battery, and the like.

In the embodiment of the present invention, the sealing portion may include the electrode lead/pouch section. That is, in the apparatus for sealing a secondary battery according to the embodiment of the present invention, a section, in which the electrode lead and the pouch are simultaneously positioned among the regions required to be sealed, may be a main sealing target, but the present invention is not limited thereto. The pouch/pouch section may also be the sealing portion.

In the embodiment of the present invention, the elastic body may have a Young's modulus of 0.01 GPa to 1.0 GPa, particularly 0.01 GPa to 0.8 GPa, and more particularly 0.01 GPa to 0.6 GPa. The elastic body may effectively come into contact with the sealing portion as the properties of the elastic body are identical to properties of rubber. The configuration in which the elastic body meets the range of the Young's modulus means that the properties of the elastic body are similar to the properties of rubber. That is, the sealing may be more efficiently performed in case that the elastic body meets the range of the Young's modulus.

In the embodiment of the present invention, the elastic body may be made of polytetrafluoroethylene (PTFE). Polytetrafluoroethylene (PTFE) may also be called Teflon and be a crystalline material having high thermal stability and chemical resistance. That is, in case that the elastic body is made of PTFE, the heat transferred by the heater may be transferred to the sealing portion, and the elastic body itself may not be damaged. That is, the elastic body made of PTFE may be used for a long period of time while improving sealing efficiency.

In addition, because the elastic body made of PTFE may have high thermal stability and chemical resistance, the elastic body may be advantageously applied to seal the electrode lead/pouch section that needs to be pressed while being heated at a relatively high temperature.

In the embodiment of the present invention, a temperature condition of the heating part may be 200°C to 250°C, particularly 200°C to 240°C, and more particularly 210°C to 230°C. The temperature condition means a temperature condition under which the heating part heats the sealing portion. When the condition is satisfied, the electrode lead/pouch section may be effectively sealed.

In the embodiment of the present invention, a pressing condition of the pressing part may be 0.1 MPa to 1.5 MPa, particularly 0.2 MPa to 1.3 MPa, and more particularly 0.3 MPa to 1.0 MPa. When the pressure condition is satisfied, the electrode lead/pouch section may be effectively sealed.

In this case, the pressing condition may be pressure applied to the sealing portion by the pressing roller, and the elastic body may effectively transfer the pressure, which is generated by the pressing roller, to the sealing portion. That is, the elastic body comes into close contact with the sealing portion, which may prevent the occurrence of a region that is not pressed.

In addition, the sealing portion may be heated, and the heated sealing portion may be pressed. Because the sealing portion is a portion made by melting a part of a region of the pouch and then pressing the melted portion, the sealing portion may be heated, and then the heated sealing portion may be pressed. However, the sealing portion may be simultaneously pressed and heated as long as the sealing may be performed.

In the present specification, the pouch-type secondary battery is configured such that the electrode assembly is accommodated in the pouch. The electrode assembly means a power generation element that is chargeable and dischargeable and has a layered structure including electrodes and separators. The types of electrode assemblies may be approximately classified into a Jelly-roll-type electrode assembly made by winding sheet-shaped positive and negative electrodes coated with active materials with a separator interposed therebetween, a stack-type electrode assembly made by sequentially stacking a plurality of positive and negative electrodes in a state in which separators are interposed between the plurality of positive and negative electrodes, and a stack-and-folding-type electrode assembly made by winding stack-type unit cells by using long separation films.

### <Method of sealing pouch-type secondary battery>

An embodiment of the present invention provides a method of sealing a pouch-type secondary battery including a sealing portion, in which the sealing portion is heated and pressed by the elastic body while the secondary battery moves in one direction. Because the elastic body presses the sealing portion, it is possible to prevent the occurrence of a region (non-sealed region) that is not sealed at a portion where a stepped portion, such as a boundary portion between the electrode lead and the pouch.

As described above, the elastic body may be a flexible band, the sealing portion may be pressed by the pressing roller, and the sealing portion may be heated by the heater. In addition, the secondary battery may be moved by the conveyor belt. The elastic body, the pressing roller, and the heater may be provided as a pair of elastic bodies, a pair of pressing rollers, and a pair of heaters. However, the present invention is not limited thereto.

In addition, the sealing portion may be simultaneously pressed and heated as long as the sealing process may be performed. However, particularly, the sealing portion may be heated and then pressed.

In this case, the embodiment of the present invention provides the method of sealing a pouch-type secondary battery, which seals the pouch that accommodates the electrode assembly, the method including moving the pouch-type secondary battery in one direction by using the conveyor belt, and allowing the sealing portion of the pouch-type secondary battery, which is moved by the conveyor belt, to pass between the pair of elastic bodies, in which the allowing of the sealing portion of the pouch-type secondary battery, which is moved by the conveyor belt, to pass between the pair of elastic bodies includes heating the sealing portion while the sealing portion passing between the pair of elastic bodies, and pressing the sealing portion, which has been heated by the pair of heaters, while the sealing portion passes between the pair of elastic bodies.

In the embodiment of the present invention, in the moving of the pouch-type secondary battery in one direction, a movement speed of the pouch-type secondary battery may be 5 m/min to 20 m/min, particularly 8 m/min to 15 m/min, and more particularly 10 m/min to 15 m/min. More specifically, the moving of the pouch-type secondary battery in one direction may use the conveyor belt, and the movement speed may mean a movement speed of the conveyor belt. When the movement speed is satisfied, the electrode lead/pouch section may be effectively sealed. That is, a non-sealed portion may be formed when the movement speed of the conveyor belt is higher than the above-mentioned speed. That is, when the movement speed of the conveyor belt is lower than the above-mentioned speed, the heating/pressing time increases, which may cause unnecessary damage.

In the embodiment of the present invention, the pressing of the at least one surface of the sealing portion of the pouch-type secondary battery, which moves in one direction, by the elastic body may be performed so that one sealing portion passes over the elastic body for 1 second to 15 seconds, particularly 1 second to 12 seconds, and more particularly 1 second to 6 seconds based on a length of 1 m of the elastic body. However, the present invention is not limited thereto. The condition may be determined depending on a size of the sealing apparatus, a size of the pouch-type secondary battery, and the like.

In the present specification, the description of the apparatus for sealing a pouch-type secondary battery may be applied to the description of the method of sealing a pouch-type secondary battery, and vice versa.

### [Mode for Invention]

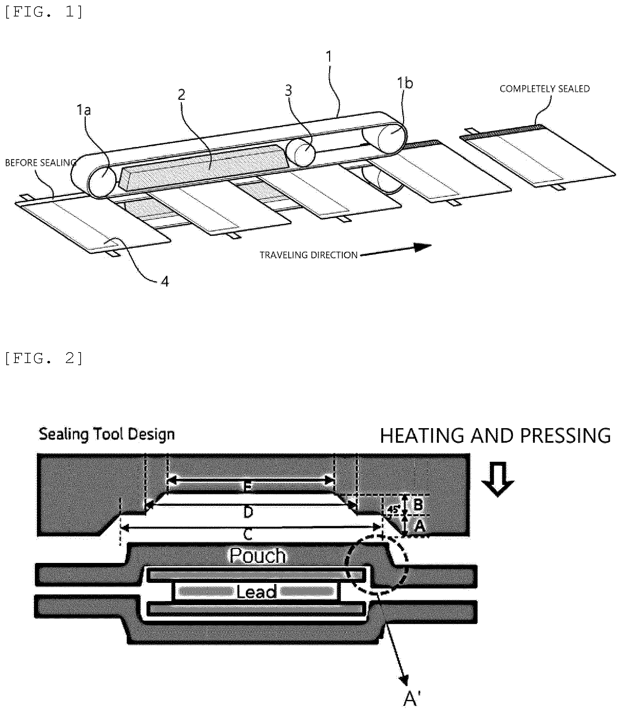

Hereinafter, the present invention will be more specifically described with reference to FIG. 1. FIG. 1 is a view illustrating an embodiment of an apparatus and method for sealing a pouch-type secondary battery according to the present invention. Specifically, FIG. 1 illustrates an example in which a pair of elastic bodies, a pair of heaters, a pair of pressing rollers, and a pair of movable rollers are provided. However, the present invention is not limited thereto.

As illustrated in FIG. 1, a sealing process starts while moving pouch-type secondary batteries 4 in one direction (corresponding to a traveling direction in FIG. 1) by using a conveyor belt (not illustrated). FIG. 1 is a view illustrating an example in which a sealing position of the pouch-type secondary battery is on an electrode lead/pouch section. As described above, a sealing portion of the pouch-type secondary battery 4, which is moved by the conveyor belt, passes between a pair of elastic bodies 1 (flexible bands). The elastic bodies 1 may each include a pair of movable rollers 1a and 1b, a heater 2, and a pressing roller 3. That is, the sealing portion may be heated and pressed by the heaters 2 and the pressing rollers 3 while passing between the elastic bodies 1. More specifically, because the heater 2 and the pressing roller 3 are disposed in the elastic body 1, heat generated by the heaters 2 and pressure generated by the pressing rollers 3 may be transferred to the sealing portion through the elastic bodies 1. In this case, because the elastic bodies 1 may uniformly transfer the heat and pressure to the sealing portion, thereby preventing a non-sealed region from being formed. In this case, the pair of movable rollers 1a and 1b is positioned inside the ends of the elastic body 1 and enables the elastic body 1 to consistently move along a predetermined route (circulation route). Because the elastic bodies 1 move along the circulation routes, the heat generated by the heaters 2 and the pressure generated by the pressing rollers 4 may be transferred to the sealing portion that continuously passes between the elastic bodies 1.

FIG. 2 is a view illustrating an apparatus and method for sealing a pouch-type secondary battery in the related art. FIG. 2 also illustrates an example in which an electrode lead/pouch section are sealed. In the case of the related art, it can be ascertained that a non-sealed region is formed on a boundary portion A (indicated by the dotted circle) between the electrode lead and the pouch. That is, an apparatus for sealing a pouch-type secondary battery in the related art may have a structure in which a region in which the sealing apparatus comes into contact with the sealing portion of the pouch is changed from section E to section D while an angle of 45° is maintained between the sealing portion of the pouch and section B based on a height, and a region in which the sealing apparatus comes into contact with the sealing portion of the pouch is changed from section D to section C while an angle of 45° is maintained between the sealing portion of the pouch and section A based on the height. However, even though the apparatus for sealing a pouch-type secondary battery in the related art heats and presses the sealing portion, a non-sealed region may be formed on the boundary portion A (indicated by the dotted circle) between the electrode lead and the pouch. In FIG. 2, an angle of 45° is provided for illustrative purposes only, and the angle may vary depending on the shape of the pouch.

That is, with reference to the comparison between FIGS. 1 and 2, it can be ascertained that the apparatus and method for sealing a pouch-type secondary battery according to the present invention may efficiently seal the pouch-type secondary battery, and the efficiency may be further improved in case that the sealing portion includes the electrode lead/pouch section. The higher sealing efficiency means that the non-sealed region is less likely to be formed.

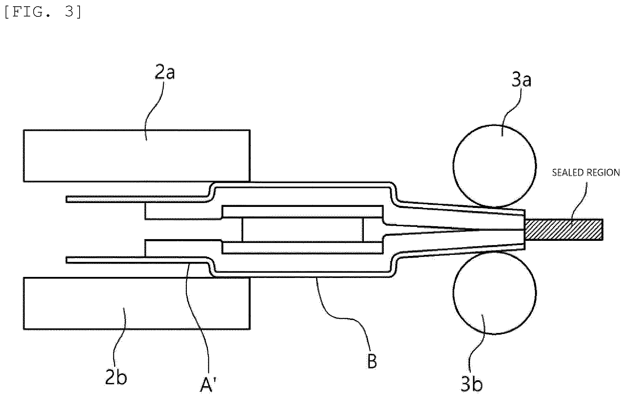

FIG. 3 is an enlarged view of an electrode lead/pouch section that is sealed by the apparatus and method for sealing a pouch-type secondary battery according to the present invention. FIG. 3 also illustrates a case in which the components are each provided as a pair of components. In other words, FIG. 3 is an enlarged view of the electrode lead/pouch section that is being sealed, as illustrated in FIG. 1. As illustrated in FIG. 3, the sealing process is performed by heaters 2a and 2b and pressing rollers 3a and 3b respectively disposed in a pair of elastic bodies (not illustrated). Because the elastic bodies may effectively transfer heat and pressure even to a boundary portion A' between the electrode lead and the pouch, it is possible to effectively seal the boundary portion A' between the electrode lead and the pouch and seal section B that is not the boundary portion between the electrode lead and the pouch.

In the embodiment of the present invention, the pouch may include polypropylene. That is, the pouch is sealed as the pouch is pressed in a state in which polypropylene contained in the pouch is melted by heat, and then polypropylene is cured again as a temperature decreases. Therefore, the sealing portion may be simultaneously heated and pressed as described above. However, the sealing portion may be heated and then pressed.

In the present specification, the methods, materials, devices, and the like, which are typically used in the corresponding field, may be used as long as the apparatus and method for sealing a pouch-type secondary battery are used.

## Claims

1. An apparatus for sealing a pouch-type secondary battery including a sealing portion, the apparatus comprising:
a transfer part configured to move the pouch-type secondary battery in one direction;
a pressing part including an elastic body configured to press at least one surface of the sealing portion; and
a heating part configured to heat the sealing portion.

2. The apparatus of claim 1, wherein the sealing portion includes an electrode lead/pouch section.

3. The apparatus of claim 1, wherein the elastic body has a Young's modulus of 0.01 GPa to 1 Gpa.

4. The apparatus of claim 1, wherein the elastic body is made of polytetrafluoroethylene (PTFE).

5. The apparatus of claim 1, wherein a temperature condition of the heating part is 200°C to 250°C.

6. The apparatus of claim 1, wherein a pressing condition of the pressing part is 0.1 MPa to 1.5 MPa.

7. A method of sealing a pouch-type secondary battery including a sealing portion, the method comprising:
moving the pouch-type secondary battery in one direction;
heating at least one surface of the sealing portion of the pouch-type secondary battery moving in one direction; and
pressing, by an elastic body, at least one surface of the sealing portion of the pouch-type secondary battery moving in one direction.

8. The method of claim 7, wherein in the moving of the pouch-type secondary battery in one direction, a movement speed of the pouch-type secondary battery is 5 m/min to 20 m/min.

9. The method of claim 7, wherein the pressing of the at least one surface of the sealing portion of the pouch-type secondary battery moving in one direction by the elastic body is performed so that one sealing portion passes over the elastic body for 1 second to 15 seconds based on a length of 1 m of the elastic body.
